Europäisches Patentamt

European Patent Office

Office européen des brevets

(19)

(11) Veröffentlichungsnummer: **0 172 928**
**A1**

(12) ## EUROPÄISCHE PATENTANMELDUNG

(21) Anmeldenummer: **84110124.9**

(22) Anmeldetag: **24.08.84**

(51) Int. Cl.⁴: **H 04 H 1/06**

(43) Veröffentlichungstag der Anmeldung: **05.03.86**
**Patentblatt 86/10**

(84) Benannte Vertragsstaaten: **BE CH DE FR GB IT LI NL SE**

(71) Anmelder: **Elektromos Hiradastechnikai Kisvallalat, Unterberger u. 33, Keszthely (HU)**

(72) Erfinder: **Zimmersmann, Robert, Jozsef Attila ut 56, Szekesfehervar (HU)**
Erfinder: **Koch, Peter, Sziget ut 49, Szekesfehervar (HU)**
Erfinder: **Korthy, Attila, Vöröshadsereg ut 76, Szekesfehervar (HU)**

(74) Vertreter: **Lehn, Werner, Dipl.-Ing. et al, Hoffmann, Eitle & Partner Patentanwälte Arabellastrasse 4 (Sternhaus), D-8000 München 81 (DE)**

(54) **Zentrales Nachrichtensystem mit einem Bezirksantennensystem.**

(57) Zentrales Nachrichtensystem, das mit dem Bezirksantennensystem verbaut ist, wobei zwischen den Nebenstellen (2) und der Hauptstelle (1) über das Bezirksantennensystem eine verdrahtete Rückverkehrskette mit einem Betriebsfrequenzband ausserhalb desselben des Bezirksantennensystems ausgebaut ist, und die an den Nebenstellen (2) angeschlossene Eingänge (7) der Rückverkehrskette über richtgekoppelte Summierglieder (8) und Summierfilter (6) die in der Signalübertragung in der Hauptrichtung beteiligten Einheiten umgehend mit dem Hauptleitungs-Summierfilter (9) der Hauptstelle verbunden sind, und das Hauptleitungs-Summierfilter (9) einen der Rückverkehrskette zugeordneten Ausgang aufweist.

EP 0 172 928 A1

ZENTRALES NACHRICHTENSYSTEM MIT EINEM
BEZIRKSANTENNENSYSTEM

Die Erfindung betrifft ein zentrales Nachrichtensystem mit einem Bezirksantennensystem.

Bezirksantennensysteme werden zur Versorgung von Städten,
Stadtteilen, Ortschaften und sonstigen Gemeinden mit
Fernseh- und UKW-Sendungen verbreitet eingesetzt. Die
Bezirksantennensysteme sind aus einer Hauptstelle und
mehreren über Hauptleitungen an dieser angeschlossenen
Nebenstellen aufgebaut. Die Nebenstellen können in Stern-
oder in Kettenform an der Hauptstelle angeschlossen sein.
Die Antennen der Hauptstelle sind über Fernseh und UKW
Kanaleinheiten mit breitbandigen Summierstufen verbunden,
die die nützlichen Signale an die Hauptleitung zusammengefaßt herausgeben. Die Nebenstellen sind je mit einem Breitbandverstärker ausgerüstet, deren Ausgänge an einem Nebenschleifverstärker und in verketteten Systemen an der von
der Nebenstelle weitergeleiteten Hauptleitung angeschlossen
sind.

Die Bezirksantennensysteme verbinden untereinander
Gebäude und Wohnungen verhältnismäßig dicht besiederter
Gebiete.

Da in dicht besiedelten Ortschaften die Ausbildung
eines Verbindungsnetzes mit Leitungen erhebliche Investitionen
erfordert, sind Versuche gemacht worden, die Bezirksantennensysteme auch für andere Zwecke auszunutzen, damit Neuinvestitionen für die Verbindungserweiterung überflüssig werden.
Da die Bezirksantennensysteme ihrem Zweck entsprechend
zur Übertragung der Signale von Rundfunkkanälen, hauptsächlich aber von Fernsehkanälen in Richtung von der Hauptstelle
bis zu den Nebenstellen (im weiteren in Hauptrichtung)
geeignet sind, sind die anderartigen Anwendungen ebenfalls
unter Verwendung von Fernsehkanälen, in enger Verbindung
mit dem Fernsehsystem ausgebaut worden. Hierzu gehören z.B.
die nach unterschiedlichen Verfahren arbeitenden Bildschirmtextsysteme und das in den USA eingeführte Münzenprogrammsystem, wobei die Teilnehmer unten den Programmen einer
Fernsehzentrale wählen können.

Alle obigen Lösungen sind ähnlich einander darin,
daß über des Bezirksantennensystem die sonstigen Informationen
nur in Richtung der Hauptstelle bis zum Teilnehmer, d.h.
in Hauptrichtung strömen können, und die Kennwerte der
Signalübertragung werden durch die selbe des Programmübertragungssystems begrenzt.

Bis jetzt ist aber kein Fernmeldesystem bekannt
geworden, in welchem zwischen zwei beliebigen Abzweigungen
eines Bezirksantennensystems eine übrige Informationsverbindung ohne irgendwelche Einschränkungen hätte hergestellt
werden können, und auch der Rückverkehr ist über bestehende
Bezirksantennensysteme nicht möglich.

Die Aufgabe der Erfindung ist die Schaffung eines

0172928

zentralen Informationfernmeldesystems, das fähig ist über das normal aufgebaute Bezirksantennensystem zwischen einer beliebigen Nebenstelle und der Hauptstelle, gegebenenfalls auch zwischen zwei beliebigen Nebenstellen praktisch beliebig viele und frei benutzbare Informationsverbindungen zustandezubringen.

Eine derartige Verbindung kann in bewohnten Gebieten aus vielen Gründen von Nutzen sein, von welchen - ohne die Vollkommenheit anzustreben - nur einige erwähnt werden sollen: zentrale Steuerungsmöglichkeit in Verkehrslenksystemen, Verbindung der telemechanischen Einheiten untereinander in energetischen Systemen, Zentralablesung der Verbrauchszähler der Wohnungen, Ausbau von Rechnerverbindungen, Herstellung von Fernsprechverbindungen ohne zusätzliche Investierungen usw.

Der Erfindung liegt die Erkenntnis zugrunde, dass mit Hilfe geeigneter Summierfilter und richtgekoppelter Summierglieder das Verbindungsnetz des Bezirksantennensystems zur Ausbildung einer Informationskette in Rückrichtung durch Umgehen bestimmter Systemeinheiten verwendet werden kann, wobei das Betriebsfrequenzband dieser Informationskette ausserhalb des Betriebsbandes des Bezirksantennensystems liegt.

Erfindungsgemäss wurde ein zentrales Nachrichtensystem geschaffen, das mit dem Bezirksantennensystem verbaut ist, wobei zwischen den Nebenstellen und der Hauptstelle über das Bezirksantennensystem eine Informationskette in Rückrichtung mit einem Betriebsfrequenzband ausserhalb des des Bezirksantennensystems ausgebaut ist, deren an den Nebenstellen angeschlossene Eingänge über richtgekoppelte Summierglieder und Summierfilter die in der Signalübertragung in der Hauptrichtung beteiligten Einheiten umgehend mit dem Hauptleitungs-Summierfilter der Hauptstelle verbunden sind, und das Hauptleitungs-Summierfilter einen der Rückverkehrskette zugeordneten Ausgang aufweist.

In einer Ausführungsform des erfindungsgemässen Systems ist in der Hauptstelle der der Rückverkehrskette zu-

- 4 -     0172928

geordnete Ausgang des Hauptleitungs-Summierfilters mit einem der Eingänge eines Frequenzumwandlers verbunden, an dessen anderem Eingang der Niederpegelausgang eines für den Rückverkehr vorgesehenen Pilotsignalgenerators angeschlossen ist, und der Ausgang des Frequenzumwandlers steht mit einem der Eingänge eines breitbandigen Summiergliedes in Verbindung, der andere Eingang des breitbandigen Summiergliedes ist an den Hochpegelausgang des für den Rückverkehr vorgesehenen Pilotsignalgenerators, sein Ausgang aber an einen Hauptrichtungsbandverstärker angebunden, zwischen Ausgang der Fernseh- und UKW-Kanaleinheiten und das Hauptleitungs-Summierfilter wird ein breitbandiges Summierglied gebunden, das ein weiterer Eingang aufweist, der mit dem Ausgang des Hauptrichtungsbandverstärkers in Verbindung steht.

Die Erfindung bezieht sich auch auf eine Nebenstelle, die ausser den zu der Nebenstelle des Bezirksantennensystems gehörenden Einheiten auch ein richtgekoppeltes Summierglied enthält, dessen Eingang mit dem Ausgang des Modulators, der Ausgang des Modulators mit dem Eingang eines zwischen einem die Hauptleitung aufnehmenden Eingang und dem Hauptrichtungsbreitbandverstärker eingeschalteten Summierfilters, und der Ausgang des Hauptrichtungsbreitbandverstärkers über einen weiteren Nebenzweigverstärker mit Eingängen von Demodulatoren verbunden ist.

Bei einer Ausführungsform der Nebenstellen wird ein zweites Summierfilter verwendet, dessen Eingang am Ausgang des Hauptrichtungsbreitbandverstärkers, dessen Ausgang an einem weiteren Eingang des richtgekoppelten Suumiergliedes und dessen gemeinsamer Zweig an der abgehenden Hauptleitung angeschlossen ist.

Das zentrale Nachrichtensystem nach der Erfindung wird an einem Ausführungsbeispiel anhand der Zeichnung erläutert, worin das allgemeine Blockschaltbild des erfindungsgemässen Systems dargestellt ist.

Das erfindungsgemässe zentrale Nachrichtensystem ist mit einem Bezirksantennensystem verbunden. Das Bezirksantennensystem hat eine Hauptstelle 1, an der über Hauptleitungen 3a, 3c, 3n Nebenstellen 2a, 2b, 2n angeschlossen sind. Über die

Nebenstelle 2a ist mit der Hauptstelle 1 eine weitere Nebenstelle 2b verbunden, so dass die Nebenstellen 2a bis 2n stern- oder kettenförmig an die Hauptstelle 1 angeschlossen werden können.

In die Hauptstelle 1 sind Fernseh- und UKW-Kanaleinheiten 14 eingebaut, deren Eingänge sich an Antennen 21 und deren Ausgänge an einen breitbandigen Summierer 12a anschliessen. Zwischen Hauptleitungen 3a bis 3n und dem breitbandigen Summierglied 12a ist ein Hauptleitungs-Summierfilter 9 vorgesehen, dessen Ausgänge, die ein unter dem Betriebsband des Bezirksantennensystems befindliches unteres Frequenzband (4 bis 25 MHz) durchlassen, mit einem Frequenzumwandler 10 in Verbindung stehen.

Ein Rückverkehr-Pilotsignalgenerator 11 weist einen Niederpegel- und einen Hochpegelausgang auf. Der Niederpegelausgang ist an den Eingang des Frequenzumwandlers 10, der Hochpegelausgang an einen der Eingänge eines zweiten breitbandigen Summiergliedes 12b angebunden. Der andere Eingang des breitbandigen Summiergliedes 12b ist mit dem Ausgang des Frequenzumwandlers 10 verbunden, wo die Grundbandsignale in ihrer transponierten Form (295 bis 320 MHz) vertreten sind. Der Ausgang des breitbandigen Summiergliedes 12b ist über Hauptrichtungsbandverstärker 13 an einem der Eingänge des ersten breitbandigen Summiergliedes 12a angeschlossen.

Im wesentlichen sind die Nebenstellen 2a bis 2n gleich aufgebaut. Nachstehend wird die Nebenstelle 2a beschrieben, bei den anderen wird der Bezugsnummer der entsprechende Buchstabe der jeweilige Nebenstelle hinzugefügt.

Die Hauptleitung 3a ist mit einer gemeinsamen Leitung eines Summierfilters $6a_1$ verbunden. Die für die hohen Frequenzen vorgesehene Klemme des Summierfilters $6a_1$ ist an den Eingang eines Hauptrichtungsbreitbandverstärkers 4a und die andere für die niedrigeren Frequenzen vorgesehene Klemme ist an den Ausgang eines Rückverkehrverstärkers 5a angeschlossen.

Der Ausgang des Hauptrichtungsverstärkers 4a ist dreifach abgezweigt: erstens über einen Nebenzweigverstärker $7a_1$ zu den Teilnehmerleitungen, zweitens über ein Summierfilter $6a_2$ zu der abgehenden Hauptleitung 3b, drittens über einen

Nebenzweigverstärker $7a_2$ zu Demodulatoren $16a_1$, $16a_2$...$16a_n$.

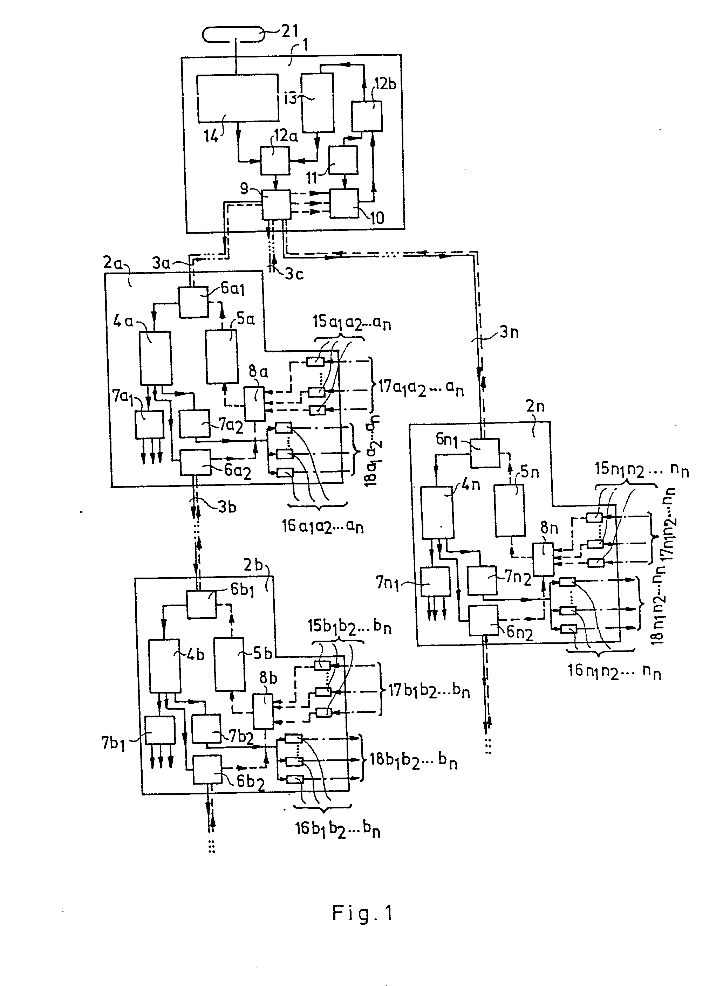

In Fig. 1 sind die Leitungen zur Übertragung der Signale des normalen Betriebsbandes des Bezirksantennensystem mit voll ausgezogener Linie, die Leitungen zur Übertragung des niedrigeren Frequenzbandes mit gestrichelter Linie dargestellt. Die Signale des niedrigeren Frequenzbandes, die über die Hauptleitung 3b bei den Nebenstelle 2a eintreffen, werden durch das Summierfilter $6a_2$ auf ein richtgekoppeltes Summierglied 8a weitergegeben. Die Nebenstelle 2a ist mit Modulatoren $15a_1$, $15a_2$ ... $15a_n$ ausgerüstet, deren Ausgänge ebenfalls mit den Eingängen des richtgekoppelten Summiergliedes 8a verbunden sind. Der Ausgang des richtgekoppelten Summiergliedes 8a ist über einen Rückverkehrverstärker 5a an den Niederfrequenzeingang des Summierfilters $6a_1$ angebunden.

Wie ersichtlich, haben die Signale des Betriebsbandes und des niederfrequenten Bandes an der Nebenstelle 2a entgegengesetzte Laufrichtungen und setzen ihre Wege über voneinander getrennte Einheiten fort. An die Nebenstelle 2a kann sich das Nachrichtensystem über Grundbandsignaleingänge $17a_1$, $17a_2$ ... $17a_n$ und Grundbandsignalausgänge $18a_1$, $18a_2$ ... $18a_n$ anschliessen.

Das Hauptleitungs-Summierfilter 9, das Summierfilter $6a_1$ ... $6a_n$ und das Summierfilter $6a_2$ ... $6n_2$ sind vorzugsweise als Abweichfilter aufgebaut, die getrennte Anschlüsse für die einzelnen Betriebsände und einen Anschluss für die beiden Bände aufweisen.

Das zentrale Nachrichtensystem nach der Erfindung arbeitet wie folgt. Sei es vorausgesetzt, dass in der Nähe der Nebenstelle 2n ein Rechner angelegt ist, an dessen Eingänge die Grundbandsignalausgänge $18n_1$, $18n_2$ ... $18n_n$, an die Ausgänge die Grundbandsignaleingänge $17n_1$, $17n_2$ ... $17n_n$ angeschlossen sind.

An die Nebenstelle 2b ist z.B. ein Verkehrsampelsystem angeschlossen, das in Wechselverbindung mit dem an der Nebenstelle 2n angebundenen Rechner gebracht werden soll. Bei der Verbindungserstellung wird der folgende Weg gefolgt:

An den Grundbandsignaleingang $17b_1$ wird der Informations-

ausgang des Verkehrsampelsystems mit in das Grundband fallenden TTL-Signalen angekoppelt. Diese Signale werden zum Modulator $15b_1$ geführt, wo sie nach irgendeinem Modulationsverfahren(ASK, FSK, PSK, MSK usw.) einen Träger im Grundbandbereich von 4 bis 25 MHz modulieren. Der modulierte Träger geht über das richtgekoppelte Summierglied 8b zum Rückverkehrverstärker 5b weiter, wo er auf den entsprechenden Pegel verstärkt wird. Die Rückverkehrssignale werden dann über das Summierfilter $6b_1$ in das Hauptleitungskabel 3b eingekoppelt.

Über das Hauptleitungskabel gelangen die Signale zum Summierfilter $6a_2$ der Nebenstelle 2a, von dort über das richtgekoppelte Summierglied 8a, nach einer Verstärkung am Rückverkehrsverstärker 5a und mit Hilfe des Summierfilters $6a_1$, zum Hauptleitungskabel 3a. Über das Hauptleitungskabel 3a erreichen nun die Rückverkehrssignale die Hauptstelle 1.

Die Rückverkehrssignale gehen über das Hauptleitungs-Summierfilter 9 zum Frequenzumwandler 10. Im Frequenzumwandler 10 werden die Signale mit dem Signal des Rückverkehrs-Pilotsignalgenerators 11 gemischt und am Ausgang im Frequenzbereich von 295 bis 320 MHz umgesetzt ausgegeben. Dieses Signal erreicht anschliessend das breitbandige Summierglied 12b.

Das breitbandige Summierglied 12b erhält ausserdem das Signal des Rückverkehr-Pilotsignalgenerators 11 mit einer Amplitude, dass am Ausgang des breitbandigen Summiergliedes 12b die Amplitude des Rückverkehr-Pilotsignalgenerators 11 und 11 dB höher ist, als die des in den Frequenzbereich von 295 bis 320 MHz fallenden Rückverkehrssignals (dies betrifft im allgemeinen alle Rückverkehrssignale).

Eine solche Übertragung der Signale des Rückverkehr-Pilotsignalgenerators 11 und der Rückverkehrsinformationen ist für die spätere Demodulation erforderlich, wobei nämlich das Signal des Rückverkehr-Pilotsignalgenerators 11 als ein Lokaloszillatorsignal arbeiten wird.

Vom Ausgang des breitbandigen Summiergliedes 12b erreicht das Signal den Hauptrichtungsbandverstärker 13, dessen Ausgang über das breitbandige Summierglied 12a mit den Ausgängen der Fernseh- und UKW-Kanaleinheiten 14 gemeinsam ausgeführt ist.

Am Ausgang des breitbandigen Summiergliedes 12a
sind also die Fernseh- und UKW-Kanäle, das Rückverkehrspilotsignal und die gemischten Rückverkehrsinformationen von
295 bis 320 MHz vorhanden. Dieses summierte Frequenzspektrum
wird über das Hauptrichtungs-Summierfilter 9 zu den Hauptleitung 3n, so sieht man das Signal bis zum Summierfilter $6n_1$,
der Nebenstelle 2n weiterlaufen. Das Summierfilter $6n_1$ ist
derart aufgebaut, dass es die Frequenzen von 40 bis 320 MHz nur
für den Hauptrichtungs-Breitbandverstärker 4n weiterlässt.

Am Ausgang des Hauptrichtungs-Breitbandverstärker 4n
werden die Signale in drei Richtungen verteilt: im Hauptzweig
gehen sie über das Summierfilter $6n_2$ bis zur nächsten Nebenstelle weiter.

Die anderen zwei Ausgänge des Hauptrichtungs-Breitbandverstärkers sind an den Nebenzweigverstärker $7n_1$ und $7n_2$ angeschlossen, von welchen der Nebenzweigverstärker $7n_1$ die Signale der Fernseh- und UKW-Kanäle zu den Teilnehmern weitergibt,
und der Nebenzweigverstärker $7n_2$ dient zur Ableitung der Rückverkehrsinformationen.

Vom Nebenzweigverstärker $7n_2$ erreichen die Signale die
Demodulatoren $16n_1$, $16n_2$ ... $16n_n$. Diese Demodulatoren sind
aus zwei Teilen aufgebaut. Der eine hat den Frequenzbereich
von 295 bis 320 MHz mit Hilfe des Rückverkehrs-Pilotsignals in
den Bereich von 4 bis 25 MHz zurückzusetzen. Diese Mischung
mit dem Rückverkehrs-Pilotsignal an der Hauptstelle und im
Demodulator ermöglicht grössere Schwankungen in der Frequenz
des Rückverkehrs-Pilotsignals und macht einen zusätlichen
Oszillator im ersten Teil des Demodulators überflüssig. Der
andere Teil des Demodulators erzeugt dem Modulationsbetrieb
des Rückverkehrssignals entsprechend TTL-Grundbandsignale.

Wird z.B. der zweite Teil des Demodulators $16n_1$ zum
Empfang des Signals des Modulators $15b_1$ ausgebildet, wird am
Grundbandsignalausgang $18n_1$ die genaue Abbildung des
über den Grundbandsignaleingang $17b_1$ eingegebenen TTL-Signals
erhalten, wobei zwischen den beiden Signalen nur ein sich in
der Verzögerung, die den Laufzeiten der genannten Elemente
zu verdanken ist, meldender Unterschied festzustellen ist.

Die durch das an der Nebenstelle 2b angeschlossene Verkehrsampelsystem ausgegebenen Informationen haben also über die Hauptstelle den Eingang des an der Nebenstelle 2n vorgesehenen Rechners erreicht. Der Rechner kann diese Informationen seinem Programm entsprechend auswerten. Stellt er anhand der erhaltenen Informationen gegebenenfalls Unregelmässigkeiten im Betrieb des Ampelsystems fest, so kann er Anweisungen erteilen über den Weg, in welchem die bekanntgegebene Signalübertragung erfolgte.

Ein möglicher Signalweg kann sein z.B. Grundbandsignaleingang $17n_2$, Modulator $15n_2$, richtgekoppeltes Summierglied 8n, Rückverkehrverstärker 5n, Summierfilter $6n_1$, Hauptleitung 3n, Hauptrichtungs-Summierfilter 9, Frequenzumwandler 10, breitbandiges Summierglied 12b, Hauptrichtungsbandverstärker 13, breitbandiges Summierglied 12a, Hauptrichtungs-Summierfilter, Hauptleitungskabel 3a, Summierfilter $6a_1$, Hauptrichtungs-Breitbandverstärker 4a, Summierfilter $6a_2$, Hauptleitungskabel 3b, Summierfilter $6b_1$, Hauptrichtungs-Breitbandverstärker 4b, Nebenzweigverstärker $7b_2$, Demodulatoren $16b_1$, $16b_2$ ... $16b_n$. Ist aber zum Empfang des Signals des Modulators $15n_2$ der Demodulator $16b_2$ vorbereitet, wird das über den Grundband-Signaleingang $17n_2$ eingegebene TTL-Signal am Grundbandsignalausgang $18b_2$ erhalten.

Aus dieser Beschreibung geht es hervor, dass in einem zweckdientlich aufgebauten Bezirksantennensystem neben den Fernseh- und UKW-Signalen zahlreiche anderartige Informationen übertragen werden können, und dass zwischen zwei beliebigen Punkten des Bezirksantennensystems über die Hauptstelle Verbindungen in beiden Richtungen aufgebaut werden können.

- 10 -

0172928

PATENTANSPRÜCHE

1. Zentrales Nachrichtensystem mit einem Bezirksantennensystem, wobei im Bezirksantennensystem eine zentrale Hauptstelle vorgesehen ist, an deren Ausgang über Hauptleitungen Nebenstelle angeschlossen sind, und die Hauptstelle Fernseh- und UKW-Kanaleinheiten mit einem an ihren Ausgängen angekoppeltem breitbandigen Summierglied aufweist, in jeder Nebenstelle ein Hauptrichtungs-Breitbandverstärker vorgesehen ist, dessen Ausgang mit einem Nebenzweigverstärker verbunden und an einer von der Nebenstelle abgehenden Hauptleitung anschliessbar ist, dadurch g e k e n n z e i c h n e t, dass zwischen den Nebenstellen (2a bis 2n) und der Hauptstelle (1) über das Bezirksantennensystem eine verdrahtete Rückverkehrkette mit einem Betriebsfrequenzband ausserhalb desselben des Bezirksantennensystems ausgebaut ist, und die an den Nebenstellen (2a bis 2n) angeschlossenen Eingänge der Rückverkehrkette über richtgekoppelte Summierglieder (8a bis 8n) und Summierfilter (6a bis 6n), die in der Signalübertragung in der Hauptrichtung beteiligten Einheiten der jeweiligen Nebenstelle um-gehen, mit einem Hauptleitungs-Summierfilter (9) der Haupt-stelle (1) verbunden sind, und das Hauptleitungs-Summierfilter (9) einen der Rückverkehrskette zugeordneten Ausgang aufweist und zum Abtrennen des Betriebsbandes der Rückverkehrkette ausgestaltet ist.

2. Zentrales Nachrichtensystem nach Anspruch 1, dadurch g e k e n n z e i c h n e t, dass in der Hauptstelle (1) der der Rückverkehrskette zugeordnete Ausgang des Hauptleitungs--Summierfilters (9) mit einem der Eingänge eines Frequenzumwandlers (10) verbunden ist, an dessen anderen Eingang der Niederpegelausgang eines für den Rückverkehr vorgesehenen Pilotsignalgenerators (11) angeschlossen ist, und der Ausgang des Frequenzumwandlers (10) mit einem der Eingänge eines breitbandigen Summiergliedes (12b) in Verbindung steht, der andere Eingang des breitbandigen Summiergliedes (12b) an den Hochpegelausgang des für den Rückverkehr vorgesehenen Pilotsignalgenerators (11), sein Ausgang aber an einem Hauptrichtungs-Bandverstärker (13) angebunden ist, und das breitbandige Summierglied (12a) zwischen den Ausgängen der Fernseh- und UKW-Kanaleinheiten und dem Eingang des Hauptleitungs--Summierfilters (9) eingeschaltet ist und das breitbandige Summierglied (12a) einen weiteren Eingang aufweist, der mit dem Ausgang des Hauptrichtungsbandverstärkers (13) in Verbindung steht.

3. Nebenstelle für das centrale Nachrichtensystem nach Anspruch 1, die einen die Hauptleitung von der Hauptstelle her empfangenden Eingang, einen an diesen Eingang angeschlossenen Hauptrichtungs-Breitbandverstärker ($6a_1$ ... $6a_n$) und einen mit dessen Ausgang verbundenen Nebenzweig-Eingangsverstärker (4a ... 4n) besitzt, dadurch gekennzeichnet, dass sie ein richtgekoppelten Summierglied (8a bis 8n) aufweist, dessen Eingang mit dem Ausgang eines Modulators oder von Modulatoren ($15a_1$ bis $15a_n$), der Ausgang des Modulators oder der Modulatoren ($15a_1$ bis $15a_n$) mit dem Eingang eines zwischen einem die Hauptleitung aufnehmenden Eingang und dem Hauptrichtungs-Breitbandverstärker (4a bis 4n) zwischengeschalteten Summierfilters ($6a_1$ bis $6n_1$) und der Ausgang des Hauptrichtungs--Breitbandverstärkers (4a bis 4n) über einen weiteren Nebenzweigverstärker ($7a_2$ bis $7n_2$) mit Demodulatoreneingängen ($16a_1$ bis $16a_n$) verbunden ist.

4. Nebenstelle nach Anspruch 1, dadurch gekennzeichnet, dass sie ein zweites Summierfilter ($6a_2$ bis $6n_2$) aufweist, dessen Eingang am Ausgang des Hauptrichtungs--Breitbandverstärkers (4), dessen Ausgang an einem weiteren Eingang des richtgekoppelten Summiergliedes (8a bis 8n) und dessen gemeinsame Zweig an der weitergehenden Hauptleitung (3b) angeschlossen ist.

Fig.1

Europäisches
Patentamt

**EUROPÄISCHER RECHERCHENBERICHT**

0172928
Nummer der Anmeldung

EP 84 11 0124

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | GB-A-1 071 646 (CLEARLINE ELECTRONICS LTD.) * Insgesamt * | 1 | H 04 H 1/06 |
| Y | | 2-4 | |
| | --- | | |
| X | DE-B-2 461 688 (KATHREIN-WERKE KG) * Spalte 5, Zeile 4 - Spalte 8, Zeile 6; Figuren 1-3 * | 1 | |
| Y | | 2-4 | |
| | --- | | |
| Y | GB-A- 769 591 (ELECTRICAL & MUSICAL INDUSTRIES) * Ansprüche 1,2; Figuren * | 2 | |
| | --- | | RECHERCHIERTE SACHGEBIETE (Int. Cl.4) |
| Y | DE-A-2 917 978 (J. REMME) * Seite 7, Zeile 6 - Seite 20, Zeile 23; Figuren * | 3 | H 04 H |
| A | | 1,2 | H 04 N |
| | ---    -/- | | |

Der vorliegende Recherchenbericht wurde für alle Patentansprüche erstellt.

| Recherchenort DEN HAAG | Abschlußdatum der Recherche 26-04-1985 | Prüfer MINNOYE G.W. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82

## EINSCHLÄGIGE DOKUMENTE

Seite 2

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | RUNDFUNKTECHNISCHE MITTEILUNGEN, Band 17, Nr. 2, 1973, Seiten 59-63, Hamburg, DE; G. SCHADWINKEL: "Kabelfernsehen in den Vereinigten Staaten von Amerika" * Seite 61, linke Spalte, Zeile 30 - Seite 62, Ende der rechten Spalte; Bild 4 * | 4 | |
| A | Idem | 1-3 | |
| | ----- | | |

RECHERCHIERTE SACHGEBIETE (Int. Cl.4)

Der vorliegende Recherchenbericht wurde für alle Patentansprüche erstellt.

| Recherchenort DEN HAAG | Abschlußdatum der Recherche 26-04-1985 | Prüfer MINNOYE G.W. |
|---|---|---|